# NEW EUROPEAN PATENT SPECIFICATION

(11) **EP 2 710 049 B2**
(45) Date of publication and mention of the opposition decision: **27.05.2020**
(45) Mention of the grant of the patent: 05.04.2017
(21) Application number: 12721649.7
(22) Date of filing: 01.05.2012
(51) Int. Cl.: C08G 59/40, C09J 163/00

(54) **STRUCTURAL ADHESIVE AND USE THEREOF**
NEUER STRUKTURKLEBER UND SEINE VERWENDUNG
NOUVEL ADHÉSIF STRUCTURAL ET SON UTILISATION

(30) Priority: 19.05.2011 US 201161487754 P
(43) Date of publication of application: 26.03.2014
(73) Proprietor: Dow Global Technologies LLC, Midland, MI 48674 (US)
(72) Inventor: LUTZ, Andreas, CH-8854 Galgenen (CH); BRAENDLI, Christof, CH-8050 Zurich (CH)
(74) Representative: Beck Greener LLP
(86) International application number: PCT/US2012/035937
(87) International publication number: WO 2012/158336

(56) References cited:
- EP-A1- 0 472 830
- WO-A2-00/22024
- JP-A- 2010 189 542
- US-A- 3 025 263
- US-A- 4 559 395
- US-A- 5 962 586

## Description

### BACKGROUND OF THE INVENTION

### 1. Field of the invention

The present invention relates to cured adhesive systems, e.g., epoxy adhesives. The invention also relates to complete knock-down assembly systems and methods of assembly using such epoxy adhesive systems.

### 2. Discussion of Background Information

A common practice in the automotive industry is to manufacture parts in one country or region, then export and/or ship to another location (e.g., country or region) for final assembly. This is called CKD (complete knock-down).

In a CKD system, parts may be partially assembled prior to shipping to the location of final assembly. In particular, in a first location (e.g., an auto parts factory), components may be bonded together using an epoxy adhesive, which is then partially cured, e.g., with elevated temperature. The partially assembled components are then shipped to a second location, e.g., the location of final assembly. Typically, additional assembly takes place at the second location, and then the curing process (begun in the first location), is completed.

If a part used in the automotive body is adhesively bonded at the first location, the adhesive needs to fulfill special performance criteria concerning the humidity resistance and tolerance such that the article assembled at the second location meets product and manufacturing specifications. A lab test to fulfill the requirements of the automotive industry consists of lap shear specimen bonded with a crash-durable adhesive, pre-hardened at 170°C for 12 min, to which a CKD-conservation oil is applied, and aged at a constant climate of 40°C and 100% relative humidity for 5 weeks (DIN EN ISO 6270-2CH). Then, the specimen is fully cured at 175° C for 25min and lap shear strength is tested according to DIN EN 1465. The loss of strength compared to the un-aged but cured specimen and the failure mode is evaluated.

Some adhesives used in CKD bonding in vehicle manufacture are disclosed in EP 1,186,462 A1, US 2004/0079478 A1, and US Patent 6,478,915. These pertain to a two-part BIW-sealer and adhesive, hardened by a UV-induced and a thermal mechanism. These are very expensive systems, and do not result in a crash-durable type (CDA) adhesive.

Adhesives used in CKD assembly may include epoxy adhesives. Epoxy adhesives typically comprise an epoxy resin which is cured with a hardener (or curing agent), and may include other components to modify properties of the material. In order to assure adequate curing, epoxy adhesive resins are typically prepared using an excess of hardener agent relative to epoxy resin, that is, an amount of hardener in excess of the stoichiometric amount thought to be necessary for fully curing the adhesive and getting the optimum crosslinking density.

While the predominant part of scientific studies, carried out with model epoxy resins, are consistent in finding that the optimum crosslinking density resulted in an epoxide (equivalents) / DICY (mols) ratio of 6-7, see e.g. Guenther et al. from Degussa (J. Appl. Polymer Sci, vol. 50, 1453-1459 (1993), a few studies involving curing of epoxy resins with dicyandiamide as a curing agent and urones as accelerators, came to different conclusions.

The Handbook of Adhesive & Sealants in its standard formulations uses 5%, 6%, but most frequently 10% by wt. of DICY referred to the total of liquid epoxy resin (while the 6% wt/wt of basic epoxy resin would represent about optimum crosslinking density according to the Degussa references by Guenther et al.).

For the comparative ratio calculations in relevant CDA IP references the following epoxide to DICY ratios resulted:
EP 1,186,462 A1 discloses ratios of equivalents epoxide/mol DICY of 5.73 to 5.98, with an average value of 5.81.
US 2004/0079478 A1 discloses ratios of equivalents epoxide/mol DICY of 5.31 to 5.66, with an average value of 5.48.
US 6,478,915 discloses ratios of equivalents epoxide/mol DICY of 5.36 to 5.61, with an average value of 5.45.
EP308664B1 to Muelhaupt discloses in examples 1-20 ratios of equivalents epoxide/mol DICY of 3.66, and in examples 21-46 discloses ratios of 4.25 to 4.53.

These latter results indicate that in current industrial adhesive formulations, an excess of DICY over the stoichiometric ratio of 6-7 / 1 is typically applied.

### SUMMARY OF THE INVENTION

It has been surprisingly found that by increasing the ratio of epoxy functionality to hardener concentration (i.e. dicyandiamide), a fully cohesive failure mode (cohesive failure mode is obtained if a crack propagates in the bulk adhesive; ISO 10365) and low decrease of lap shear strength according to DIN EN 1465 after aging could be achieved.

The invention provides an epoxy hardener ratio with improved humidity resistance.

As noted above, the epoxy to hardener ratio in an adhesive is usually set to an excess of hardener compared to epoxy functional groups. After CKD aging (see above), the failure mode is critical and decrease of lap shear strength is not optimal. We have found that by decreasing the amount of hardener (increasing the ration of epoxy to hardener) the failure mode after aging is heavily improved and decrease of lap shear after aging minimized.

The present invention provides a manufacturing method comprising applying an epoxy adhesive between two components; bonding the two components by partially curing the epoxy adhesive in a first curing stage to obtain a partially cured article, wherein the bonding is carried out at a first location; aging the partially cured article; and subsequently, at a second location, curing the partially cured aged article in a second curing stage, wherein the epoxy adhesive comprises an epoxy resin and less than or a stoichiometric amount of hardener, wherein the hardener is dicyandiamide and the ratio of equivalents of epoxy resin to moles of dicyandiamide is from 7 to 11, and wherein the second location is not the same as the first location.

In the epoxy adhesive, the ratio of equivalents of epoxy resin to moles of hardener is 7-11, preferably 7-10, more preferably 7-9. The epoxy adhesive is preferably a partially curable adhesive, preferably a heat curable adhesive.

The epoxy adhesive preferably comprises an epoxy resin having general formula: 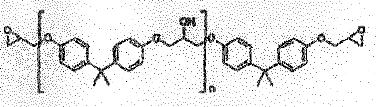 where *n* is in the range of 0 to about 25. The hardener dicyandiamide.

The epoxy adhesive may comprise an accelerator. When used, the accelerator preferably comprises 0.3-5wt%, preferably 0.5-2wt%, based on weight of the epoxy adhesive.

The epoxy adhesive may also comprise at least one of a toughener, a mineral filler, a thixotropic agent, a viscosity regulator, silica, a diluent, an adhesion promoter, a surfactant, a wetting agent, a flexibilized epoxy agent, a gelling compound, a flame retardant, a pigment, and combinations of two or more thereof.

The present invention also provides compositions, articles, and methods, wherein the composition or article is aged 2 days to 1 year, preferably 1 week to 9 months, more preferably 1 month to 4 months. The present invention also provides methods that include aging pre-cured compositions and/or articles for 2 days to 1 year, preferably 1 week to 9 months, more preferably 1 month to 4 months.

The present invention also provides compositions, articles and methods wherein the epoxy adhesive is a partially curable adhesive, preferably a heat curable adhesive.

### BRIEF DESCRIPTION OF THE DRAWINGS

Figure 1 is a photograph of blocks to which epoxy adhesive according to Comparative Example A was applied and aged 5 weeks under simulated CKD conditions.
Figure 2 is a photograph of blocks to which epoxy adhesive according to Comparative Example B was applied and aged 5 weeks under simulated CKD conditions.
Figure 3 is a photograph of blocks to which epoxy adhesive according to Comparative Example C was applied and aged 5 weeks under simulated CKD conditions.
Figure 4 is a photograph of blocks to which epoxy adhesive according to Example D was applied and aged 5 weeks under simulated CKD conditions.
Figure 5 is a photograph of blocks to which epoxy adhesive according to Example E was applied and aged 5 weeks under simulated CKD conditions.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to details of the present invention in more detail than is necessary for the fundamental understanding of the present invention, the description making apparent to those skilled in the art how the several forms of the present invention may be embodied in practice.

Unless otherwise stated, a reference to a compound or component includes the compound or component by itself, as well as in combination with other compounds or components, such as mixtures of compounds.

As used herein, the singular forms "a," "an," and "the" include the plural reference unless the context clearly dictates otherwise.

Except where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not to be considered as an attempt to limit the application of the doctrine of equivalents to the scope of the claims, each numerical parameter should be construed in light of the number of significant digits and ordinary rounding conventions.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range. Similarly, when a parameter, variable, or other quantity, is described with a set of upper values, and a set of lower values, then this is to be understood as an express disclosure of all ranges formed from each pair of upper and lower values.

The present invention provides an epoxy adhesive, and provides for methods of using the epoxy adhesive, e.g., in a CKD assembly system. The epoxy adhesive may comprise one or more epoxy resins, and a dicyandiamide hardener, wherein the hardener is present in less than or a stoichiometric amount relative to the epoxy resin. The epoxy adhesive may also comprise one or more other additional components to modify a property of the composition before, during, or after curing. Such additional components may include, e.g., one or more of accelerators, tougheners, fillers, thixotroping agents, viscocity regulators, adhesion promoters, wetting agents, corrosion inhibitors, shrinkage inhibitors, humidity scavengers, epoxy silane, fumed silica, and pigments.

Epoxy resins useful in this invention include a wide variety of curable epoxy compounds and combinations thereof. Useful epoxy resins include liquids, solids, and mixtures thereof. Typically, the epoxy compounds are epoxy resins which are also referred to as polyepoxides. Polyepoxides useful herein can be monomeric (e.g., the diglycidyl ether of bisphenol A, diglycidyl ether of bisphenol F, digylcidyl ether of tetrabromobisphenol A, novolac-based epoxy resins, and tris-epoxy resins), higher molecular weight resins (e.g., the diglycidyl ether of bisphenol A advanced with bisphenol A) or polymerized unsaturated monoepoxides (e.g., glycidyl acrylates, glycidyl methacrylate, allyl glycidyl ether, etc.) to homopolymers or copolymers. Most desirably, epoxy compounds contain, on the average, at least one pendant or terminal 1,2-epoxy group (i.e., vicinal epoxy group) per molecule. Solid epoxy resins that may be used in the present invention can preferably comprise or preferably be mainly based upon Bisphenol A. For example, a preferred epoxy resin is diglycidyl ether of bisphenol A Dow Chemical DER 664 UE solid epoxy.

One preferable epoxy resin has general formula: 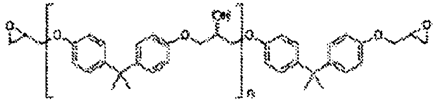 where n is generally in the range of 0 to about 25. Basic liquid resins, e.g. D.E.R. 331, have epoxy equivalent weights in the range of about 180-195 g/mol.

Combinations of epoxy resins may be used to adjust properties of the epoxy adhesive. In compositions and methods of the present invention, the epoxy adhesive may comprise any amount of epoxy resin. Preferably, the liquid and/or solid epoxy resin comprises more than or about 35wt%, more preferably more than or about 40wt%, of the epoxy adhesive. Preferably, the liquid and/or solid epoxy resin comprises less than or about 60wt%, more preferably less than or about 55wt%, of the epoxy adhesive.

The hardener a latent catalyst that does not cause hardening under ambient conditions ("ambient conditions" meaning, e.g., typical room temperature and normal lighting conditions). The hardener is dicyandiamide (also known as DICY, dicyanodiamide, and 1- or 2-cyanoguanidine). DICY (CAS 461-58-5) has empirical formula C₂N₄H₄, molecular weight 84, and structural formula:

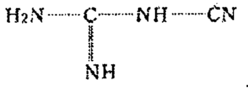

The hardener, DICY, e.g. available from AirProducts under the trade name Amicure™, may be present in any amount that is stoichiometric or sub-stoichiometric with respect to the epoxy resin. Amounts of hardener are typically measured using percents by weight rather than percents by moles or equivalents when referring to formulas for epoxy adhesives. The same is valid for epoxy resins. In order to calculate the ratio of equivalents of epoxy resin to moles of DICY the following conversion may be calculated: The weight of each epoxide-group-containing component of a composition is to be divided by the respective epoxy equivalent weight of that component and added to give the total epoxy equivalent of a composition. The desired ratio is then obtained by dividing the thus obtained total of epoxy equivalents by the number of moles of DICY, in the composition. The latter is obtained by dividing the weight of hardener in the composition by the molecular weight (i.e., 84 g/mol for DICY), as is obvious to those skilled in the art.

With this in mind, the ratio of epoxy equivalent to moles DICY is 7 to 11. Preferably, the ratio of epoxy equivalent to molar DICY is 10 or less, most preferably 9 or less.

Common flexibilizer like polyamine modified epoxy resins , fatty acid modified epoxy resins, core shell rubber epoxy adducts etc. may be used.

A toughener is optionally used in the compositions and methods of the present invention. Any tougheners may be used, including, e.g., RAM tougheners and rubber epoxy resins, as well as combinations thereof. Some preferred RAM tougheners include those described in EP 0308664 A1 or US 2006/0276601 A1. When used, tougheners, e.g., RAM tougheners are present in amounts more than or about 5wt%, preferably more than or about 10wt% of the epoxy adhesive. When used, tougheners, e.g., RAM tougheners are present in amounts less than or about 20wt%, more preferably less than or about 18 wt% of the epoxy adhesive.

Some preferred rubber modified epoxy resins are sold under the trade name Struktol®, e.g., Struktol® 3604. When used, rubber modified epoxy resins may be present in amounts more than or about 5wt%, more preferably more than or about 8wt%, more preferably more than or about 10wt% of the epoxy adhesive. When used, rubber modified epoxy resins may be present in amounts less than or about 25wt%, more preferably less than or about 20wt% of the epoxy adhesive.

Other optional fillers include mineral fillers, such as calcium carbonate, calcium oxide, and talc. Calcium carbonate (e.g., sold under trade name Omya®), which can be used to reduce shrinkage and increase corrosion resistance. Calcium oxide (e.g., sold under the trade name Chaux Vive) is a humidity scavenger that may help to preserve a partially-cured epoxy adhesive prior to final curing. Talc is available, e.g., under the trade name Mistrofil®, and aluminum magnesium silicate (wollastonite) is available, e.g., under the trade name Nyad® 200.

When used, fillers may be present in any useful amount. Typically, fillers may be present in amounts more than or about 3wt%, more preferably more than or about 5wt% of the epoxy adhesive. Fillers may be present in amounts less than or about 20wt%, more preferably less than or about 15wt% of the epoxy adhesive.

Thixotropic agents and other viscosity regulators may also be optionally used. One such preferred example includes fumed silica (e.g., sold under the trade name Aerosil®). A preferred thixotropic agent that also improves wash-off resistance is a mixture of polyester and liquid epoxy resin (LER), such as Dynacol (25% polyester 7330 and 75% LER 330).

When used, fumed silica may be present in amounts more than or about 2wt%, preferably more than or about 6wt% of the epoxy adhesive. Fumed silica may be present in amounts less than or about 15wt%, more preferably less than or about 12wt% of the epoxy adhesive.

Reactive and non-reactive diluents may also optionally be used. A preferred reactive diluent is a monoglycidyl ester of neodecanoic acid, which also can act as a viscocity-reducing agent. It is commercially available, e.g., under the trade name Erisys GS-110.

A curing accelerator may be optionally used to modify the conditions under which the high-temperature latent catalyst DICY is used, e.g., in a heat-curable epoxy adhesive, a curing accelerator can be optionally used to reduce the temperature at which DICY becomes catalytically active. A preferred curing accelerator for a heat-curable epoxy adhesive includes a tertiary polyamine embedded in a polymer matrix. A preferred example is 2,4,6-tris(dimethylaminomethyl)phenol integrated into a poly(p-vinylphenol) matrix such as described in EP-A-0 197 892.

When used, curing accelerator may be present in any amount that suitably adjusts the activation condition of latent catalyst. Preferably, a curing accelerator may be present in amounts more than or about 0.3wt%, more preferably more than or about 0.5wt% of the epoxy adhesive. Preferably, curing accelerator may be present in amounts less than or about 5wt%, more preferably less than or about 2wt% of the epoxy adhesive.

At least one adhesion promoter may also be optionally used. Preferred adhesion promotes include epoxy silanes, e.g., sold under the trade name Silquest™ A-187.

At least one surfactant or wetting agent may be optionally used. A preferred wetting agent is a non-ionic fluorinated polymer. Such agents are also preferably capable of absorbing residual oils (e.g., manufacturing and processing oils) on metal surfaces, thereby facilitating adhesion to metal surfaces.

At least one aliphatic phenol may also be optionally used, preferably a phenol derivative with an aliphatic group in the meta-position, e.g., cardanol. Such compounds promote adhesion and corrosion resistance. Cardanol is commercially available, e.g., under the trade name Cardolite™ NC 700.

Other additives may also be used. Some non-limiting examples of other additives include flexbilized epoxy resins such as fatty acid or polyamine epoxy adducts, gelling compounds such as polyester or PVB, and flame retardants such as aluminium-tris-hydroxide. Pigments or coloring agents, e.g., Irgalite® green, may also be used.

The present invention provides epoxy adhesives that may be used on a variety of surfaces. Some suitable materials include metals (e.g., aluminum, steel), thermoplastic polymers (e.g., polyethylenes, polypropylenes, polyurethanes, acrylics, and polycarbonates, including copolymers, terpolymers, etc.), thermoset polymers (e.g., vulcanized rubber, ureaformaldehyde foams, melamine resins), wood, and composites. The epoxy adhesives may be used to bond identical materials (e.g., steel and steel), similar materials (e.g., steel and aluminum) or dissimilar materials (e.g., polycarbonate and vulcanized rubber, or aluminum and wood).

Methods according to the present invention include preparation of an epoxy adhesive by combining one or more epoxy resins, and a dicyandiamide hardeners, wherein the hardener is present in less than or a stoichiometric amount relative to the epoxy resin. Other components may also be combined with the epoxy adhesive.

The present invention also provides a manufacturing method that comprises bonding two components with an epoxy adhesive that comprises an epoxy resin and less than or a stoichiometric amount of hardener, followed by pre-curing, or partially curing, the epoxy adhesive.

The pre-cured article, or partially cured article, so manufactured may be stored for later additional assembly, and/or shipped to another location for additional assembly. After the pre- or partially-cured article is received (e.g., arrives at a second location for additional assembly), it may undergo further assembly into a more complete, or complete, article of manufacture, and is then subjected to second curing conditions. When the article ispartailly cured, the second curing conditions preferably more fully cure, or completely cure, the epoxy adhesive.

The passage of time between the end of the pre-curing and the beginning of the second curing is referred to as aging. Aging is preferably more than or about 2 days, more preferably more than or about 1 week, more preferably more than or about 1 month. Aging is preferably less than or about 1 year, more preferably less than or about 9 months, more preferably less than or about 4 months. An article that has subjected to aging is referred to as being in a state that is aged.

By "partially cure" is meant that the article is subjected to curing conditions that are insufficient to fully cure the article. A pre-cured article may be completely cured or partially cured. A "partially curable" adhesive is one in which the curing process can be halted after initiation, and prior to full curing, e.g., an epoxy adhesive comprising a latent catalyst, e.g., a heat curable epoxy adhesive.

### EXAMPLES

The following examples are for illustrative purposes only and are not intended to limit the scope of the present invention. Unless otherwise stated, the units are percent by weight.

### Preparation of Epoxy Adhesives

Comparative Example A uses a large excess of DICY, and Comparative Example B is a typical CDA formulation using an excess of DICY. Comparative Example C uses a very slight excess of DICY, Example D uses a stoichiometric amount of DICY, and Example E uses less DICY than the stoichiometric amount.

**Table 1**

| | **A** | **B** | **C** | **D** | **E** |
|---|---|---|---|---|---|
| **Epoxy / DICY ratio** | **3** | **4.8** | **6** | **7** | **9** |
| Liquid epoxy resin14) | 21.5 | 21.5 | 21.5 | 21.5 | 21.5 |
| Solid epoxy resin14) | 2.7 | 2.7 | 2.7 | 2.7 | 2.7 |
| Tougheners 1) | 14.90 | 14.90 | 14.90 | 14.90 | 14.90 |
| rubber epoxy2) | 12.8 | 12.8 | 12.8 | 12.8 | 12.8 |
| Omya BSH3) | 8 | 8 | 8 | 8 | 8 |
| Mistrofil4) | 0.4 | 0.4 | 0.4 | 0.4 | 0.4 |
| Fumed Silica5) | 6.8 | 9.03 | 9.8 | 10.25 | 10.87 |
| **DICY6)** | **6.3** | **4.07** | **3.3** | **2.85** | **2.23** |
| Color Pigment7) | 0.3 | 0.3 | 0.3 | 0.3 | 0.3 |
| 2,4,6-tris(dimethylaminomethyl)phenol in a poly(p-vinylphenol) matrix | 1 | 1 | 1 | 1 | 1 |
| PE-lntermediate8) | 14.7 | 14.7 | 14.7 | 14.7 | 14.7 |
| Erisys GS1109) | 1.1 | 1.1 | 1.1 | 1.1 | 1.1 |
| Silquest A-18710) | 0.6 | 0.6 | 10.6 | 0.6 | 0.6 |
| Wetting Agent | 0.3 | 0.3 | 0.3 | 0.3 | 0.3 |
| Cardolite NC70011) | 0.6 | 0.6 | 0.6 | 0.6 | 0.6 |
| Nyad 20012) | 2 | 2 | 2 | 2 | 2 |
| Ca013) | 6 | 6 | 6 | 6 | 6 |

| | | | | | |
|---|---|---|---|---|---|
| 1) Such as decribed in EP 0308664 A1 (example 13) or US 2006/0276601 A1 (example 2) 2) Such as Struktol 3604 from Schill&Seilacher. 3) Available from Omya. 4) Available from Luzenac. 5) Available from Degussa. 6) Available as Amicure from Air Products. 7) Available from Huntsman. 8) LER 330-Dynacoll 7330 crystalline polyester-diol 8:2 blend. Dynacoll is available from Evonik 9) Available from CVC. 10) Available from Momentive. 11) Available from Cardolite. 12) Available from Nyco. 13) Available from Lloist. 14) Available from Dow | | | | | |

### Simulated CKD Aging

Adhesive compositions A-E were applied to two sets of hot dipped galvanized steel substrates HC 400T + Z100. They were then subjected to simulated CKD aging in accordance with DIN EN ISO 6270-2CH as follows.

The samples were partially cured for 12 minutes in an oven at 170° C. One set of blocks was aged for 3 weeks, and the other was aged for 5 weeks. Aging was done at 40° C and 100% relative humidity. The aged samples were then cured for 25 minutes in an oven at 175° C.

The results of lap shear strength testing according to DIN EN 1465 are shown in Table 2, wherein "Ep/DICY ratio" refers to the ratio of equivalents of epoxy resin to moles of DICY as discussed above. Test temperature of 23°C, test speed of 10mm/min, adhesive layer thickness of 0.2mm and bonding dimension of 10 x 45mm were used.

**Table 2**

| | | Hot dipped galvanized steel HC 400T + Z100; degreased | | | | |
|---|---|---|---|---|---|---|
| | | Initial | 3 weeks CKD | Change from Initial | 5 weeks CKD | Change from Initial |
| | Ep/DICY Ratio | | [MPa] | [%] | [MPa] | [%] |
| A | 3 | 26. | 3.3 | -87 | 3.4 | -87 |
| B | 4.9 | 27.5 | 17.8 | -35 | 13.4 | -51 |
| C | 6 | 26.2 | 19.0 | -27 | 18.7 | -28 |
| D | 7 | 23.8 | 18.1 | -24 | 20.4 | -14 |
| E | 9 | 22.9 | 20.1 | -12 | 20.4 | -11 |

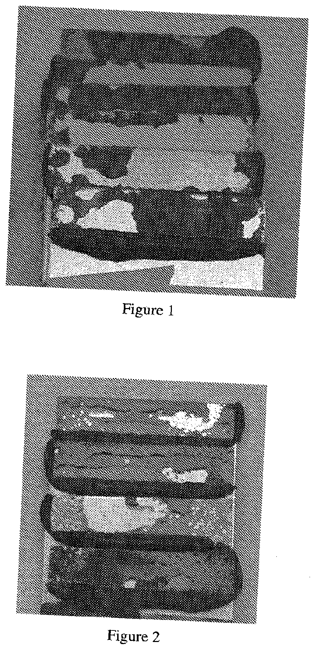

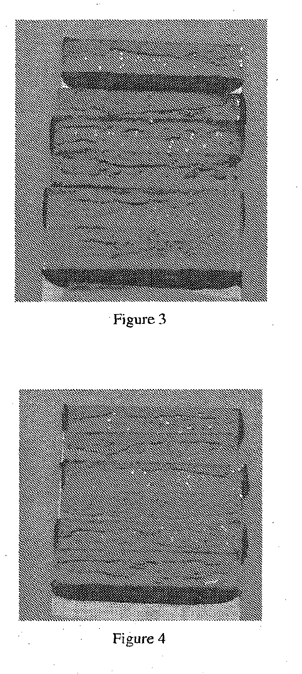

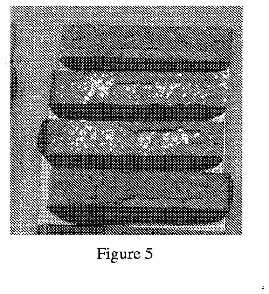

Photographs of Samples A-E after aging for 5 weeks and curing are shown in Figures 1-5, respectively. The failure modes are, respectively, 100% adhesive failure mode for Figure 1; 50% cohesive failure mode /50% adhesive failure mode for Figure 2; and 100% cohesive failure mode for Figures 3, 4, and 5.

### Cataplasma Aging

Adhesive compositions A-E were applied to hot dipped galvanized steel samples (DX 56 D + Z 100MC). They were then subjected to simulated cataplasma aging as follows (according to DIN EN ISO 9142, which is 70°C at 98% relative humidity).

The samples were partially cured for 12 minutes in an oven at 170° C. The blocks were then aged for 7 days at 70° C and 100% relative humidity. The aged samples were then cured for 25 minutes in an oven at 175° C.

The results of lap shear strength testing according to DIN EN 1465 are shown in Table 3, wherein "Ep/DICY ratio" refers to the ratio of equivalents of epoxy resin to moles of DICY as discussed above. Test temperature of 23°C, test speed of 10mm/min, adhesive layer thickness of 0.2mm and bonding dimension of 10 x 45mm were used.

**Table 3**

| | | Hot dipped galvanized steel DX 56 D + Z 100MC | | |
|---|---|---|---|---|
| | | Initial | 7d Cata | Change from Initial |
| | Ep/DICY Ratio | [MPa] | [MPa] | [%] |
| A | 3 | 17.5 | 2.2 | -87 |
| B | 4.9 | 17.8 | 8.5 | -52 |
| C | 6 | 17.4 | 8.9 | -49 |
| D | 7 | 16.8 | 13.1 | -22 |
| E | 9 | 15.1 | 12.8 | -15 |

Sample A shows 100% adhesive failure mode, Samples B and C show 40% adhesive failure mode and 60% cohesive failure mode, Sample D shows 5% adhesive failure mode and 95% cohesive failure mode , and Sample E shows 0% adhesive failure mode and 100% cohesive failure mode.

Although the present invention has been described in considerable detail with regard to certain versions thereof, other versions are possible, and alterations, permutations, and equivalents of the version shown will become apparent to those skilled in the art upon a reading of the specification and study of the drawings. Also, the various features of the versions herein can be combined in various ways to provide additional versions of the present invention. Furthermore, certain terminology has been used for the purposes of descriptive clarity, and not to limit the present invention. Therefore, any appended claims should not be limited to the description of the preferred versions contained herein and should include all such alterations, permutations, and equivalents as fall within the scope of the present invention.

Having now fully described this invention, it will be understood to those of ordinary skill in the art that the methods of the present invention can be carried out with a wide and equivalent range of conditions, formulations, and other parameters without departing from the scope of the invention or any embodiments thereof.

## Claims

1. A manufacturing method comprising applying an epoxy adhesive between two components; bonding the two components by partially curing the epoxy adhesive in a first curing stage to obtain a partially cured article, wherein the bonding is carried out at a first location; aging the partially cured article; and subsequently, at a second location, curing the partially cured aged article in a second curing stage, wherein the epoxy adhesive comprises an epoxy resin and less than or a stoichiometric amount of hardener, wherein the hardener is dicyandiamide and the ratio of equivalents of epoxy resin to moles of dicyandiamide is from 7 to 11, and wherein the second location is not the same as the first location.

2. The method of claim 1, wherein the epoxy adhesive is a partially curable adhesive, preferably a heat curable adhesive.

3. The method of any of claims 1-2, wherein the epoxy adhesive comprises an epoxy resin having general formula: 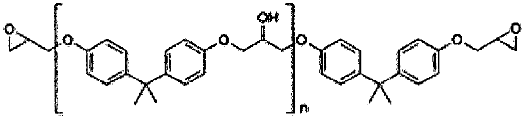 where *n* is in the range of 0 to 25.

4. The epoxy adhesive of any of claims 1-3, wherein the epoxy adhesive comprises 0.3-5wt%, preferably 0.5-2wt%, of at least one curing accelerator.

5. The method of any of claims 1-4, wherein the epoxy adhesive comprises at least one of a toughener, a mineral filler, a thixotropic agent, a viscosity regulator, silica, a diluent, an adhesion promoter, a surfactant, a wetting agent, a flexibilized epoxy agent, a gelling compound, a flame retardant, a pigment, and combinations of two or more thereof.

6. The method of claim 1, wherein the article is aged 2 days to 1 year, preferably 1 week to 9 months, more preferably 1 month to 4 months.

## Patentansprüche

1. Ein Herstellungsverfahren, beinhaltend das Auftragen eines Epoxidklebstoffs zwischen zwei Komponenten; Binden der zwei Komponenten durch Teilaushärten des Epoxidklebstoffs in einer ersten Aushärtestufe, um einen teilausgehärteten Artikel zu erhalten, wobei das Binden an einer ersten Stelle ausgeführt wird; Altern des teilausgehärteten Artikels; und im Anschluss, an einer zweiten Stelle, Aushärten des teilausgehärteten gealterten Artikels in einer zweiten Aushärtestufe, wobei der Epoxidklebstoff ein Epoxidharz und weniger als oder eine stöchiometrische Menge an Härtungsmittel beinhaltet, wobei das Härtungsmittel Dicyandiamid ist und das Verhältnis von Äquivalenten von Epoxidharz zu Molen Dicyandiamid 7 bis 11 beträgt, und wobei die zweite Stelle nicht dieselbe wie die erste Stelle ist.

2. Verfahren gemäß Anspruch 1, wobei der Epoxidklebstoff ein teilaushärtbarer Klebstoff, vorzugsweise ein wärmeaushärtbarer Klebstoff ist.

3. Verfahren gemäß einem der Ansprüche 1-2, wobei der Epoxidklebstoff ein Epoxidharz mit der folgenden allgemeinen Formel beinhaltet: 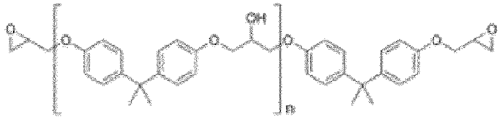 wobei *n* in dem Bereich von 0 bis 25 liegt.

4. Epoxidklebstoff gemäß einem der Ansprüche 1-3, wobei der Epoxidklebstoff zu 0,3-5 Gew.-%, vorzugsweise 0,5-2 Gew.-%, mindestens einen Aushärtungsbeschleuniger beinhaltet.

5. Verfahren gemäß einem der Ansprüche 1-4, wobei der Epoxidklebstoff mindestens eines von einem Elastifikator, einem Mineralfüllstoff, einem Thixotropiermittel, einem Viskositätsregler, Siliciumdioxid, einem Verdünnungsmittel, einem Haftvermittler, einem Tensid, einem Benetzungsmittel, einem weichgemachten Epoxidmittel, einer Gelierverbindung, einem Flammenhemmstoff, einem Pigment und Kombinationen von zwei oder mehr davon beinhaltet.

6. Verfahren gemäß Anspruch 1, wobei der Artikel für 2 Tage bis 1 Jahr, vorzugsweise 1 Woche bis 9 Monate, noch bevorzugter 1 Monat bis 4 Monate gealtert wird.

## Revendications

1. Une méthode de fabrication comprenant l'application d'un adhésif époxy entre deux éléments ; le collage des deux éléments par un durcissage partiel de l'adhésif époxy lors d'une première étape de durcissement afin d'obtenir un article partiellement durci, dans laquelle le collage est réalisé au niveau d'un premier emplacement ; le vieillissement de l'article partiellement durci ; et ensuite, au niveau d'un deuxième emplacement, le durcissement de l'article vieilli partiellement durci lors d'une deuxième étape de durcissement, dans laquelle l'adhésif époxy comprend une résine époxy et moins de ou une quantité stœchiométrique d'agent de réticulation, l'agent de réticulation étant le dicyandiamide et le rapport des équivalents de résine époxy aux moles de dicyandiamide va de 9 à 11, et dans laquelle le deuxième emplacement n'est pas identique au premier emplacement.

2. La méthode de la revendication 1, dans laquelle l'adhésif époxy est un adhésif partiellement durcissable, de préférence un adhésif durcissable à la chaleur.

3. La méthode de l'une quelconque des revendications 1 à 2, dans laquelle l'adhésif époxy comprend une résine époxy ayant pour formule générale : 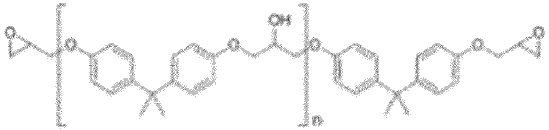 où n est dans l'intervalle allant de 0 à 25.

4. L'adhésif époxy de l'une quelconque des revendications 1 à 3, dans laquelle l'adhésif époxy comprend de 0,3 à 5 % en poids, de préférence de 0,5 à 2 % en poids, d'au moins un accélérateur de durcissement.

5. La méthode de l'une quelconque des revendications 1 à 4, dans laquelle l'adhésif époxy comprend au moins un agent de renforcement, une charge minérale, un agent thixotrope, un régulateur de viscosité, de la silice, un diluant, un promoteur d'adhérence, un tensio-actif, un mouillant, un agent époxy flexibilisé, un composé gélifiant, un retardateur de flamme, un pigment, et des combinaisons de deux ou plus de ceux-ci.

6. La méthode de la revendication 1, dans laquelle l'article est vieilli pendant 2 jours à 1 an, de préférence pendant 1 semaine à 9 mois, de préférence encore pendant 1 mois à 4 mois.
